# EUROPEAN PATENT APPLICATION

(11) **EP 4 389 833 A1**
(43) Date of publication of application: **26.06.2024**
(21) Application number: 23219782.2
(22) Date of filing: 22.12.2023
(51) Int. Cl.: C09D 11/107, C09D 11/322, C09D 11/102, C09D 11/38

(54) **AQUEOUS INKJET COMPOSITIONS INCLUDING POLYMERIC THICKENER**

(30) Priority: 23.12.2022 US 202218088095
(71) Applicant: DuPont Electronics, Inc., Wilmington, Delaware 19805 (US)
(72) Inventor: LI, XIAOQING, WILMINGTON (US); HUH, JI YEON, WILMINGTON (US)
(74) Representative: Dehns

(57) **Abstract**

An aqueous inkjet composition including a pigment; water; a water-soluble organic solvent; and a polymeric thickener comprising an acid number of at least 150 mg KOH/g of solids.

## Description

### BACKGROUND

Digital printing methods such as inkjet printing are becoming increasingly important for markets other than conventional desktop printing for small office/home office. Digital printing methods have gained popularity in printing of textiles, and offer a number of potential benefits over conventional printing methods such as screen printing. Digital printing eliminates the set up expense associated with screen preparation and can potentially enable cost effective short run production. Digital printing furthermore allows visual effects such as tonal gradients and infinite pattern repeat sizes that cannot be practically achieved with a screen printing process.

The expansion of inkjet for commercial and packaging printing applications has brought the needs for direct printing to lower absorbing substrates such as coated papers, coated corrugated board, and folding cartons, to non-absorbent plastic substrates such as vinyl, polystyrene, and polypropylene boards, and to flexible substrates such as polypropylene, polyester, nylon, and polyethylene films. The lower absorption rates of these substrates may cause slower drying, poor image quality, and prints that stick together before use. These defects can become worse when printing at high speeds.

In order to address these problems, faster drying inks have been formulated with lower boiling point water-soluble organic solvents (humectants) and less solvent loading. However, for these types of conventional ink formulations, the reduced solvent loading must be compensated for by using a higher amount of pigment and/or a polymer binder. This often results in issues with poor jettability, which is magnified for solvents having a boiling point that is less than 200°C.

Accordingly, there remains a continuing need for aqueous inkjet inks having a reduced solvent load while achieving good drying and jetting properties.

### BRIEF DESCRIPTION

Provided is an aqueous inkjet composition including a pigment; water; a water-soluble organic solvent; and a polymeric thickener including an acid number of at least 150 mg KOH/g of solids.

Another aspect provides a method of coating a substrate including applying the aqueous inkjet composition to at least one surface of the substrate.

Still another aspect provides a coated substrate including a substrate; and a layer derived from the aqueous inkjet composition disposed on at least one surface of the substrate.

The above described and other features are exemplified by the following figures and detailed description.

### DETAILED DESCRIPTION

Reference will now be made in detail to exemplary embodiments, examples of which are illustrated in the present description. In this regard, the present exemplary embodiments may have different forms and should not be construed as being limited to the descriptions set forth herein. Accordingly, the exemplary embodiments are merely described below to explain aspects of the present description. As used herein, the term "and/or" includes any and all combinations of one or more of the associated listed items. Expressions such as "at least one of," when preceding a list of elements, modify the entire list of elements and do not modify the individual elements of the list.

It will be understood that when an element is referred to as being "on" another element, it can be directly in contact with the other element or intervening elements may be present therebetween. In contrast, when an element is referred to as being "directly on" another element, there are no intervening elements present.

It will be understood that, although the terms first, second, third, etc., may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section discussed below could be termed a second element, component, region, layer, or section without departing from the teachings of the present embodiments.

The terminology used herein is for the purpose of describing particular embodiments only and is not intended to be limiting. As used herein, the singular forms "a," "an," and "the" are intended to include the plural forms as well, unless the context clearly indicates otherwise.

It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

As used herein, the term "dispersion" means a two-phase system wherein one phase including finely divided particles (often in a colloidal size range) distributed throughout a bulk substance, the particles being the dispersed or internal phase and the bulk substance being the continuous or external phase.

As used herein, the term "dispersant" means a surface-active agent added to a suspending medium to promote uniform and maximum separation of extremely fine solid particles often of colloidal sizes.

As used herein the term "(meth)acrylate" refers collectively and alternatively to the acrylate and methacrylate and the term "(meth)acrylic acid" refers collectively and alternatively to the acrylic acid and methacrylic acid, so that, for example, "butyl (meth)acrylate" means butyl acrylate and/or butyl methacrylate.

As used herein, the term "polymer" includes both homopolymers and copolymers unless specifically stated otherwise. As used herein, the term "copolymer" refers to polymer compositions containing units of two or more different monomers, the term "terpolymer" refers to polymer compositions containing units of three or more different monomers, and the term "tetrapolymer" refers to polymer compositions containing units of four or more different monomers.

As used herein, the term "binder" refers to a polymeric compound or a mixture of polymeric compounds that may be added to the aqueous inkjet compositions. The binder can impart properties to the final printed material that, for example, gives greater durability to the printed material. The binder is further described herein.

The present inventors have developed a way to balance and optimize two opposing attributes of aqueous inkjet compositions, namely a short drying time and good jettability. The optimization of these two parameters is important for printing on non-porous and less porous substrate such as flexible plastic films, foils, rigid plastics, and coated media. In this approach, aqueous inkjet compositions, which may be referred to simply as inks, are formulated with small amounts of a particular type of polymeric thickener to reduce the overall organic solvent level without increasing the amount of binder and/or the pigment loading. The aqueous inkjet compositions enable faster drying times while maintaining j ettability of the inks.

According to an aspect, provided herein is an aqueous inkjet composition including a pigment, water, a water-soluble organic solvent, and a polymeric thickener comprising an acid number of at least 150 mg KOH/g of solids. The acid number represents an amount of KOH in milligrams (mg) that are required to completely neutralize the acidic groups in a 1-gram sample of the polymeric thickener.

The aqueous inkjet composition includes a pigment. Suitable pigments include those generally well-known in the art for aqueous inkjet inks. Traditionally, pigments are stabilized by dispersing agents, such as polymeric dispersants or surfactants, to produce a stable dispersion of the pigment in the vehicle. More recently, so-called "self-dispersible" or "self-dispersing" pigments (hereafter "SDP") have been developed. As the name would imply, SDPs are dispersible in water without dispersants, containing pigment particles whose surface has been chemically modified with hydrophilic, dispersibility-imparting groups that allow the pigment to be stably dispersed in an aqueous vehicle without a separate dispersant. "Stably dispersed" means that the pigment is finely divided, uniformly distributed and resistant to particle growth and flocculation. In one or more embodiments, the pigment is a self-dispersed pigment or a polymeric dispersed pigment.

The pigment particles are sufficiently small to permit free flow of the ink through the ink-jet printing device, especially at the ejecting nozzles that usually have a diameter ranging from 10 micrometers (µm) to 50 µm. The particle size also has an influence on the pigment dispersion stability, which is critical throughout the life of the ink. Brownian motion of minute particles will help prevent the particles from flocculation. It is also desirable to use small particles for maximum color strength and gloss. The range of useful particle size may be from 0.005 µm to 15 µm. The pigment particle size may be from 0.005 µm to 5 µm, or from 0.005 µm to 1 µm. The average particle size as measured by dynamic light scattering is less than 500 nanometers (nm), or less than 300 nm.

The selected pigment(s) may be used in dry or wet form. For example, pigments are usually manufactured in aqueous media, and the resulting pigments are obtained as a water-wet presscake. In presscake form, the pigment does not agglomerate to the extent like it is in dry form. Thus, pigments in water-wet presscake form do not require as much mixing energy to deagglomerate in the premix process as pigments in dry form. Representative commercial dry pigments are listed in U.S. Pat. No. 5,085,698.

Examples of pigments with coloristic properties useful in ink-jet compositions may include Pigment Blue 15:3 and Pigment Blue 15:4 (for cyan); Pigment Red 122 and Pigment Red 202 (for magenta); Pigment Yellow 14, Pigment Yellow 74, Pigment Yellow 95, Pigment Yellow 110, Pigment Yellow 114, Pigment Yellow 128 and Pigment Yellow 155 (for yellow); Pigment Orange 5, Pigment Orange 34, Pigment Orange 43, Pigment Orange 62, Pigment Red 17, Pigment Red 49:2, Pigment Red 112, Pigment Red 149, Pigment Red 177, Pigment Red 178, Pigment Red 188, Pigment Red 255 and Pigment Red 264 (for red); Pigment Green 1, Pigment Green 2, Pigment Green 7 and Pigment Green 36264 (for green); Pigment Blue 60, Pigment Violet 3, Pigment Violet 19, Pigment Violet 23, Pigment Violet 32, Pigment Violet 36 and Pigment Violet 38 (for blue); and carbon black. However, some of these pigments may not be suitable for preparation as SDP. Colorants are referred to herein by their "CI" designations established by Society Dyers and Colourists, Bradford, Yorkshire, UK and published in The Color Index, Third Edition, 1971.

The SDPs may be prepared by grafting a functional group or a molecule containing a functional group onto the surface of the pigment, by physical treatment (such as vacuum plasma), or by chemical treatment (for example, oxidation with ozone, hypochlorous acid, or the like). A single type or a plurality of types of hydrophilic functional groups may be bonded to one pigment particle. The hydrophilic groups are carboxylate or sulfonate groups which provide the SDP with a negative charge when dispersed in an aqueous vehicle. The carboxylate or sulfonate groups are usually associated with monovalent and/or divalent cationic counter-ions. Methods of making SDPs are well known and can be found, for example, in U.S. Pat. Nos. 5,554,739 and 6,852,156. The SDPs may be black, such as those based on carbon black, or may be colored pigments.

The SDPs may have a degree of functionalization wherein the density of anionic groups is less than 3.5 micromoles per square meter of pigment surface (3.5 µmol/m²), and more specifically, less than 3.0 µmol/m². Degrees of functionalization of less than 1.8 µmol/m², and more specifically, less than 1.5 µmol/m², are also suitable and may be preferred for certain specific types of SDPs.

The pigment may be present in the aqueous inkjet composition in an amount from 0.1 weight percent (wt%) to 15 wt%, or from 0.1 wt% to 10 wt%, or from 0.1 wt% to 8 wt%, based on total weight of the aqueous inkjet composition.

Pigments that are stabilized by added dispersing agents may be prepared by methods known in the art. It is generally desirable to make the stabilized pigment in a concentrated form. The stabilized pigment may be first prepared by premixing the selected pigment(s) and polymeric dispersant(s) in an aqueous carrier medium (such as water and, optionally, a water-miscible solvent), and then dispersing or deflocculating the pigment. The dispersing step may be accomplished in a 2-roll mill, media mill, a horizontal mini mill, a ball mill, an attritor, or by passing the mixture through a plurality of nozzles within a liquid jet interaction chamber at a liquid pressure of at least 34,473.8 kilopascals (kPa) to produce a uniform dispersion of the pigment particles in the aqueous carrier medium (microfluidizer). Alternatively, the concentrates may be prepared by dry milling the polymeric dispersant and the pigment under pressure. The media for the media mill may be chosen from commonly available media, including zirconia, YTZ, and/or nylon. These various dispersion processes are in a general sense well known in the art, as exemplified by U.S. Pat. No. 5,022,592, U.S. Pat. No. 5,026,427, U.S. Pat. No. 5,310,778, U.S. Pat. No. 5,891,231, U.S. Pat. No. 5,679,138, U.S. Pat. No. 5,976,232 and US20030089277. The disclosure of each of these publications is incorporated by reference herein. Preferred are 2-roll mill, media mill, and by passing the mixture through a plurality of nozzles within a liquid jet interaction chamber at a liquid pressure of at least 34,473.8 kPa.

After the milling process is complete the pigment concentrate may be "let down" into an aqueous system. As used herein, the term "let down" means the dilution of the concentrate with mixing or dispersing, where the intensity of the mixing/dispersing normally being determined by trial and error using routine methodology, and often being dependent on the combination of the polymeric dispersant, solvent, and pigment.

The dispersant used to stabilize the pigment is preferably a polymeric dispersant. Either structured or random polymers may be used, although structured polymers are preferred for use as dispersants. The term "structured polymer" means polymers having a block, branched, or graft structure. Examples of structured polymers include AB or BAB block copolymers such as disclosed in U.S. Pat. No. 5,085,698; ABC block copolymers such as disclosed in EP-A-0556649; and graft polymers such as disclosed in U.S. Pat. No. 5,231,131. Other polymeric dispersants that can be used are described, for example, in U.S. Pat. No. 6,117,921, U.S. Pat. No. 6,262,152, U.S. Pat. No. 6,306,994 and U.S. Pat. No. 6,433,117. In one or more embodiments, the polymeric dispersant may include a (meth)acrylic polymer, a polyurethane polymer, or a styrene-maleic anhydride copolymer.

Exemplary (meth)acrylic polymer dispersants generally include both hydrophobic and hydrophilic monomers. Some examples of hydrophobic monomers include methyl methacrylate, n-butyl methacrylate, 2-ethylhexyl methacrylate, benzyl methacrylate, 2-phenylethyl methacrylate and the corresponding acrylates. Examples of hydrophilic monomers include methacrylic acid, acrylic acid, dimethylaminoethyl(meth)acrylate and salts thereof. Also, quaternary salts of dimethylaminoethyl(meth)acrylate may be used.

As used herein, the hydrophobic region is the part that contains the absorbing segment, which is the segment or function of the dispersant interacting with the pigment surface to effect dispersion. The hydrophilic segment is the segment that provides the stability of dispersion by interaction in the solute mixture to provide stabilization. This stabilization is characterized as steric stabilization or ionic stabilization. These phenomena were described by H. Spinelli in Adv. Mater, 1998, 10, no. 15, page 1215 to 1218. The ionically stabilized polymeric dispersants described above have little if any steric stabilization.

The polymeric dispersant can be neutralized prior to the start of the dispersion process. That is, the initial mixture of solvent blend and polymer dispersant has an appropriate amount of neutralizing agent. Alternatively, the neutralizing agent may be added with the polar solvent during the dispersing process. An additional option is to have the polymeric dispersant partially neutralized in the initial mixture and add additional neutralizing agent in the polar solvent. The amount of neutralization of the polymeric dispersant in the final mixture is up to about 100% neutralized, or up to about 90% neutralized.

The neutralizing agent may be hydroxides of the alkali metals, amines, or the like. Examples of neutralizing agents include organic bases such as mono-, di, tri-methylamine, morpholine, n-methyl morpholine; alcohol amines such as dimethylethanolamine (DMEA), methyldiethanolamine, mono-, di, and tri-ethanolamine; pyridine; ammonium hydroxide; tetraalkylammonium salts such as tetramethylammonium hydroxide, tetraethyl-ammonium hydroxide; alkali metals such as lithium, sodium and potassium, or the like. Preferred neutralizing agents include dimethylethanolamine and sodium and potassium hydroxides, with potassium hydroxide being particularly preferred for inks to be used in thermal inkjet printers.

The polyurethane polymeric dispersants may be prepared from isocyanate compounds, isocyanate-reactive compounds, and an isocyanate or isocyanate reactive compound that has an ionic substituent. This ionic substituent is present in the polyurethane dispersant to stabilize it in an aqueous solution. Often these polyurethane dispersants may be prepared as a polyurethane prepolymer with excess isocyanate groups. Then a chain terminating isocyanate-reactive group may be added to obtain a polyurethane dispersant. The ionic content of the polyurethane may be from 10 to 90 mg KOH/g of polymer when measured as an acid group or an amine group depending on the source of the ionic substituent. The acid number represents an amount of KOH in milligrams (mg) that are required to completely neutralize the acidic groups in a 1-gram sample of the polymer. The ionic component may be at least partially neutralized prior to its use as a dispersant. The number average molecular weight (Mₙ) of these polyurethanes may be from 2000 grams per mole (g/mol) to 9500 g/mol, as determined by gel permeation chromatography (GPC).

When used, the polymeric dispersants may be included in the aqueous inkjet compositions in an amount from 0.1 wt% to 5 wt%, or from 0.1 wt% to 3 wt%, based on total weight of the aqueous inkjet composition.

In one or more embodiments, the aqueous inkjet composition may further include a polymeric binder. The binder may impart properties to the final printed material that, for example, gives greater durability to the printed material. Typical polymers used as binders in inkjet compositions may include polyurethane dispersions and polyurethane solutions, acrylics, styrene acrylics, styrene butadienes, styrene butadiene acrylonitriles ethylene acrylic acids, ethylene vinyl acetate emulsions, latexes, or the like. The binder may be a solution or stabilized as an emulsion by having ionic substituents such as carboxylic acids, sulfur containing acids, amine groups, and other similar ionic groups.

The polymeric binder may be used singly or in combination with other binders. In one or more embodiments, the polymeric binder includes a polyurethane, a (meth)acrylic polymer, or a polyurethane-acrylic copolymer, and wherein the polymeric binder is different from the polymeric dispersant. For example, the polymeric binder may be a polyurethane. An optional polyurethane binder may provide desirable crosslinking when used in the aqueous inkjet composition to enhance the durability of the printed image.

The polymeric binder may be present in the aqueous inkjet composition in an amount of at least 0.6 wt%, based on the total weight of the aqueous inkjet composition, or for example, from 0.6 wt% to 15 wt%, or from 1 wt% to 15 wt%, based on the total weight of the aqueous inkjet composition.

The polymeric binder may be added together with other components to a pigment dispersion to prepare an aqueous inkjet composition. Though some polymers can function both as a binder and as a dispersant, many binders are different from dispersants that disperse a pigment to form a pigment dispersion. The polymeric binders and the polymeric dispersants of the instant disclosure are different polymers.

The aqueous inkjet composition also includes an aqueous vehicle, which includes water and one or more water-soluble organic solvents. Examples of water-soluble organic solvents include alcohols, ketones, keto-alcohols, ethers and others, such as thiodiglycol, sulfolane, 1,3-dimethyl-2-imidazolidinone, caprolactam, or the like; glycols such as ethylene glycol, diethylene glycol, triethylene glycol, tetraethylene glycol, propylene glycol, dipropylene glycol, tripropylene glycol, trimethylene glycol, butylene glycol, hexylene glycol, or the like; addition polymers of oxyethylene or oxypropylene such as polyethylene glycol, polypropylene glycol, or the like; triols such as glycerol, 1,2,6-hexanetriol, or the like; lower alkyl ethers of polyhydric alcohols, such as ethylene glycol monomethyl ether, ethylene glycol monoethyl ether, diethylene glycol monomethyl, diethylene glycol monoethyl ether, or the like; and lower dialkyl ethers of polyhydric alcohols, such as diethylene glycol dimethyl, diethyl ether, or the like.

In one or more embodiments, the organic solvent may have a boiling point from 150°C to 230°C, or from 150°C to 200°C, or from 150°C to 180°C.

The aqueous inkjet composition may include water in an amount from 50 wt% to 99 wt%, or from 50 wt% to 95 wt%, based on total weight of the aqueous inkjet composition.

The aqueous inkjet composition may include the water-soluble organic solvent in an amount of equal to or less than 35 wt%, or equal to or less than 30 wt%, based on total weight of the aqueous inkjet composition. For example, the aqueous inkjet composition may include the water-soluble organic solvent in an amount from 1 wt% to 35 wt%, or from 1 wt% to 30 wt%, based on total weight of the aqueous inkjet composition.

In some embodiments, the aqueous inkjet composition may have a pH from 8 to 9.5, or from 8 to 9. Buffers may be used to maintain pH. Buffers include, for example, tris(hydroxymethyl)-aminomethane ("Trizma" or "Tris").

The aqueous inkjet composition includes a polymeric thickener including an acid number of at least 150 mg KOH/g of solids. In other words, the polymeric thickener includes at least one acidic functional group and has an acid number of at least 150 mg KOH/g of solids. The acid number represents an amount of KOH in milligrams (mg) that are required to completely neutralize the acidic groups in a 1-gram sample of the polymeric thickener. In one or more embodiments, the aqueous inkjet composition may include a polymeric thickener including an acid number of 150 mg KOH/g of solids to 650 mg KOH/g of solids, or 175 mg KOH/g of solids to 550 mg KOH/g of solids, or 200 mg KOH/g of solids to 450 mg KOH/g of solids.

In one or more embodiments, the polymeric thickener includes an alkali swellable acrylic emulsion (ASE) polymer, a hydrophobically modified alkali swellable emulsion (HASE) polymer, or a combination thereof. ASE polymers thicken only in a neutral state, hence the expression "alkali-swellable": the result is an ionic repulsion mechanism between the various carboxylate groups carried by the polymer chain. These ionized groups polarize the water molecules, which cause the viscosity of the medium to increase. In addition to the aforementioned ionic phenomenon, HASE polymers involve interactions between the associative hydrophobic groups, which also contributes to thickening the medium. These mechanisms, and particularly the alkali-swellable nature of these emulsions and their ability to thicken an aqueous environment at a pH near neutral, have been described in the documents WO 2007/144721 and "Practical guide to associative thickeners" (Proceedings of the Annual Meeting Technical Program of the FSCT, 2000, 78th, 644-702).

The ASE and HASE polymers may be synthesized by free-radical emulsion polymerization of varying mixtures of anionic monomers (e.g., acrylic acid, methacrylic acid, maleic anhydride, or the like), lipophilic monomers (e.g., ethyl acrylate, butyl acrylate, methyl methacrylate, or the like), and associative monomers (e.g., long chain C₅-C₂₂ acrylate or styrene derivative monomers). The ASE and HASE polymers may optionally contain polymerized units derived from other vinyl monomers selected from the group consisting of vinyl acetals, vinyl acetates, vinyl alcohols, vinyl halides, vinyl ethers, crosslinking agents, and chain transfer agents.

The ASE polymers may include homopolymers derived from an ethylenically unsaturated monomer that contains a negative charge when in a basic aqueous solution, or copolymers thereof. As used herein, such monomers or repeating units that have a negative charge in a basic aqueous solution are referred to as "anionic monomers." The ASE polymers may also be copolymers, as noted above, and may further include additional repeating units derived from other monomers, such as from lipophilic monomers.

Exemplary anionic monomers include (meth)acrylic acid, crotonic acid, phosphoethyl (meth)acrylate, 2-acrylamido-2-methyl-1-propanesulfonic acid, sodium vinyl sulfonate, itaconic acid, fumaric acid, maleic acid, monomethyl itaconate, monomethyl fumarate, monobutyl fumarate, maleic anhydride, or the like. Preferred monomers are (meth)acrylic acid, itaconic acid, 2-acrylamido-2-methyl-1-propanesulfonic acid, maleic anhydride, or fumaric acid. In one or more embodiments, the ASE polymer comprises a (meth)acrylic acid homopolymer. In other embodiments, the ASE polymer may be a copolymer that includes at least one repeating unit derived from (meth)acrylic acid.

Exemplary lipophilic monomers include C₁ to C₇ alkyl and C₂ to C₇ hydroxyalkyl esters of acrylic and methacrylic acid such as ethyl (meth)acrylate, methyl (meth)acrylate, 2-ethylhexyl acrylate, butyl (meth)acrylate, 2-hydroxyethyl acrylate, 2-hydroxybutyl methacrylate; vinyl aromatics and substituted vinyl aromatics such as styrene, vinyl toluene, t-butylstyrene, isopropylstyrene, p-chlorostyrene, or the like; vinyl esters such as vinyl acetate, vinyl versatate, or the like; acrylonitrile; methacrylonitrile; dienes such as butadiene, isoprene, or the like; substituted poly(ethylene)s such as vinyl chloride, vinylidene chloride, or the like; or a combination thereof. Preferred lipophilic monomers include ethyl (meth)acrylate, methyl (meth)acrylate, 2-ethylhexyl acrylate, butyl (meth)acrylate, 2-hydroxyethyl acrylate, 2-hydroxybutyl methacrylate, or a combination thereof.

The HASE polymers are similar to the ASE polymers, as described above, and further include one or more repeating units derived from an associative monomer. The associative monomers of the HASE polymer may be an ethylenically unsaturated monomer with an attached long chain C₅-C₅₀ acrylate group. Examples of associative monomers include esters such as C₈-C₃₀ alkylphenoxy(ethyleneoxy)₆₋₁₀₀ ethyl (meth)acrylates and C₈-C₃₀ alkoxy(ethyleneoxy)₆₋₅₀ ethyl (meth)acrylates, C₈-C₃₀ alkylphenoxy ethyl (meth)acrylates, and C₈-C₃₀ alkoxy ethyl (meth)acrylates. Other linkages such as, but not limited to ethers, amides, and urethanes may be used. Other examples of associative monomers include vinyl esters of C₅-C₃₀ carboxylic acid and C₅-C₃₀ alkyl ester of (meth)acrylate.

In certain embodiments, the ASE or HASE polymers may be cross-linked via a cross-linking agent to provide a polymer having a network structure. In such embodiments, the polymers may include a small amount (0.01 to 5 weight %) of at least one polyethylenically unsaturated monomer. Suitable examples include allyl methacrylate (ALMA), ethylene glycol dimethacrylate (EGDMA), butylene glycol dimethacrylate (BGDMA), diallyl phthalate (DAP), methylenebisacrylamide, pentaerythritol di-, tri-, and tetra-acrylates, divinyl benzene, polyethylene glycol diacrylates, bisphenol A diacrylates, or the like, or a combination thereof.

The ASE and HASE polymers may be manufactured in the form of direct emulsions of the alkali-swellable polymer in water, whose active ingredient content may be between 10% and 45% of their total weight. The corresponding synthesis process is particularly described in the following publications: "Synthesis of an alkali-swellable emulsion and its effect on the rate of polymer diffusion in poly(vinyl acetate-butyl acrylate) latex films" (Journal of Polymer Science, Part A: Polymer Chemistry, 2005, 43 (22), pp. 5632-5642), "Structural and rheological properties of hydrophobically modified alkali-soluble emulsion solutions" (Journal of Polymer Science, Part B: Polymer Physics, 2002, 40(18), pp. 1985-1994), "Viscoelastic properties of hydrophobically modified alkali-soluble emulsion in salt solutions" (Polymer, 1999, 40 (23), pp. 6369-6379), "Dissolution behavior in water of a model hydrophobic alkali-swellable emulsion polymer with C20H41 groups" (Canadian Journal of Chemistry, 1998, 76 (11), pp. 1779-1787). Many patent applications have also covered their manufacture (EP 0,089,213 A1, EP 0 646,606 A1, EP 0,979,833 A1 for ASE, and EP 0,013,836 A1, WO 93/2454 A1, U.S. Pat. No. 4,268,641 A1, U.S. Pat. No. 4,421,902 A1, U.S. Pat. No. 3,915,921 A1 for HASE).

In one or more embodiments, the hydrophobically modified alkali swellable polymer may be a copolymer derived from two or more of (meth)acrylic acid, a (meth)acrylate ester, and maleic acid.

The molecular weight of the ASE and HASE polymers may be measured by standard methods such as, for example, size exclusion chromatography (SEC) or intrinsic viscosity. In one or more embodiments, the ASE and HASE polymers may have a weight average molecular weight (M_{w)} that is greater than 50,000 g/mol, as determined by gel permeation chromatography (GPC).The ASE and HASE polymers may have a M_{w} from 50,000 g/mol to 1,000,000 g/mol, or from 50,000 g/mol to 500,000 g/mol, or from 50,000 g/mol to 400,000 g/mol, as measured by GPC.

Exemplary ASE and HASE polymers may include RHEOVIS^{®} HS 1162, RHEOVIS^{®} HS 1152, RHEOVIS^{®} HS 1169, RHEOVIS^{®} HS 1212, RHEOVIS^{®} HS 1332, RHEOVIS^{®} AS 1130, RHEOVIS^{®} AS 1337, and RHEOVIS^{®} AS 1125 available from BASF (Germany), but embodiments are not limited thereto. Other exemplary ASE and HASE polymers include ACRYSOL^{®} ASE-60, ACRYSOL^{®} ASE-75, and ACRYSOL^{®} ASE-95NP available from Dow Chemical; ALCOGUM^{®} L15, ALCOGUM^{®} L29, ALCOGUM^{®} L31, ALCOGUM^{®} L350, ALCOGUM^{®} L344, and ALCOGUM^{®} SL920 from Nouryon (Netherlands); and RHEOTECH^{®} 146, RHEOTECH^{®} 330, RHEOTECH^{®} 53L, RHEOTECH^{®} 1800, RHEOTECH^{®} 2000, and RHEOTECH^{®} 2800 from Arkema (King of Prussia, PA).

The polymeric thickener may be present in the aqueous inkjet composition in an amount from 0.01 wt% to 0.5 wt%, or from 0.05 wt% to 0.4 wt%, or from 0.05 wt% to 0.3 wt%, based on total weight of the aqueous inkjet composition.

Other additives may be formulated into the aqueous inkjet composition, to the extent that such additives do not interfere with the stability and j ettability of the aqueous inkjet composition. This may be readily determined by routine experimentation by one skilled in the art.

Surfactants may be added to the aqueous inkjet composition to adjust surface tension and wetting properties. Exemplary surfactants include ethoxylated acetylene diols (e.g., SURFYNOL^{®} series, available from Evonik), ethoxylated alkyl primary alcohols (e.g., NEODOL^{®} series, available from Shell), secondary alcohols (e.g., TERGITOL^{®} series, available from Dow Chemical), sulfosuccinates (e.g., AEROSOL^{®} series, available from Cytec), organosilicons (e.g., DYNOL^{®} or TEGO^{®} Wet series, available from Evonik), fluoro surfactants (e.g. CAPSTONE^{®} series, available from Chemours), or the like, or a combination thereof.

When present, surfactants may be used in the amount from 0.01 wt% to 5 wt%, or from 0.2 wt% to 2 wt%, based on the total weight of the aqueous inkjet composition.

Inclusion of sequestering (or chelating) agents such as ethylenediaminetetraacetic acid (EDTA), iminodiacetic acid (IDA), ethylenediamine-di(o-hydroxyphenylacetic acid) (EDDHA), nitrilotriacetic acid (NTA), dihydroxy ethyl glycine (DHEG), trans-1,2-cyclohexanediaminetetraacetic acid (CyDTA), diethylenetriamine-N,N,N',N",N"-pentaacetic acid (DTPA), and glycoletherdiamine-N,N,N',N'-tetraacetic acid (GEDTA), and salts thereof, may be advantageous, for example, to eliminate deleterious effects of heavy metal impurities.

Co-solvents, such as those exemplified in U.S. Pat. No. 5,272,201 may be included to improve pluggage inhibition properties of the aqueous inkjet composition.

Certain reagents can be used as additives to effect post printing curing. Post printing curing is often facilitated by heating of the sample after it is printed. Examples of suitable post printing curing agents include amide and amine-formaldehyde resin, phenolic resins, urea resins, and blocked polyisocyanate. The selected post printing curing agent should be soluble or dispersible in the aqueous inkjet composition. Aqueous inkjet compositions containing the selected post printing curing agents should be stable in storage, which means no curing reaction took place before printing. Only after the ink is printed and when the printed image is fused with heat and optionally pressure, that the post printing curing agent undergoes chemical reaction with the one or more of the binders, dispersant, ink vehicle, substrate, etc. A specific example of post printing curing agent is CYMEL^{®} 303 ULF (available from Cytec, West Patterson, N.J).

Biocides may be used in the aqueous inkjet composition to inhibit growth of microorganisms.

Drop velocity, separation length of the droplets, drop size, and stream stability are greatly affected by the surface tension and the viscosity of the ink composition. The aqueous inkjet compositions may have a surface tension from 20 dyne/cm to 70 dyne/cm at 25°C. The ink has physical properties are adjusted to the ejecting conditions and printhead design. The inks should have excellent storage stability for long periods so as not clog to a significant extent in an inkjet apparatus. Further, the ink should not corrode parts of the ink jet printing device it comes in contact with, and it should be essentially odorless and non-toxic.

As described above, the polymeric thickener is formulated into the aqueous inkjet composition in the specified low amount, which allows for the use of less organic solvents without increasing binder loading or pigment loading, while achieving fast drying times and good jettability. In addition, to allowing for the use of less water-soluble organic solvents, the polymeric thickener also increases the viscosity of the aqueous inkjet composition.

In one or more embodiments, the aqueous inkjet composition may have a viscosity at 25°C that is greater than a viscosity at 25°C of a comparable composition that comprises the pigment, the water, and the water-soluble organic solvent, wherein the comparable composition does not comprise the polymeric thickener. In other words, the comparable composition includes the same components as the aqueous inkjet composition, with the exception of not including the polymeric thickener. For example, in the comparable composition, the amount of the polymeric thickener may be replaced by an equal amount of water or water-soluble organic solvent. Alternatively, in the comparable composition, the polymeric thickener may be replaced by another thickener that is different from the polymeric thickener as defined herein.

In one or more embodiments, the aqueous inkjet composition may have a viscosity at 30°C that is greater than a viscosity at 30°C of a comparable composition that comprises the pigment, the water, and the water-soluble organic solvent, wherein the comparable composition does not comprise the polymeric thickener.

In some embodiments, the aqueous inkjet composition (e.g., with at least 0.1 wt% of the polymeric thickener) may have a viscosity at 25°C that is at least 20% greater than a viscosity at 25°C of a comparable composition that comprises the pigment, the water, and the water-soluble organic solvent, wherein the comparable composition does not comprise the polymeric thickener. For example, the aqueous inkjet composition (e.g., with at least 0. 1wt% of the polymeric thickener) may have a viscosity at 25°C that is at least 30% greater, at least 40% greater, at least 50% greater, at least 75% greater, or at least 100% greater than a viscosity at 25°C of a comparable composition that comprises the pigment, the water, and the water-soluble organic solvent, wherein the comparable composition does not comprise the polymeric thickener.

In some embodiments, the aqueous inkjet composition (e.g., with at least 0.1 wt% of the polymeric thickener) may have a viscosity at 30°C that is at least 20% greater than a viscosity at 30°C of a comparable composition that comprises the pigment, the water, and the water-soluble organic solvent, wherein the comparable composition does not comprise the polymeric thickener. For example, the aqueous inkjet composition (e.g., with at least 0.1 wt% of the polymeric thickener) may have a viscosity at 30°C that is at least 30% greater, at least 40% greater, at least 50% greater, at least 75% greater, or at least 100% greater than a viscosity at 30°C of a comparable composition that comprises the pigment, the water, and the water-soluble organic solvent, wherein the comparable composition does not comprise the polymeric thickener.

The aqueous inkjet compositions may have a viscosity from 3 centipoise (cP) to 100 cP, or from 5 cP to 80 cP, or from 7 cP to 75 cP at 25°C.

Viscosity is measured at 25°C on a Brookfield viscometer model LVT and using the appropriate spindle, giving readings between 20% to 80% of the full-scale reading.

The term "ink set" as used herein refers to all the individual inks or other fluids an ink-jet printer is equipped to jet. Ink sets may include at least three differently colored inks. For example, a cyan (C), magenta (M) and yellow (Y) ink forms a CMY ink set. In some embodiments, an ink set includes at least four differently colored inks, for example, by adding a black (K) ink to the CMY ink set to form a CMYK ink set. The magenta, yellow and cyan inks of the ink set may be aqueous inks, and may contain dyes, pigments, or combinations thereof as the colorant. Such other inks are, in a general sense, well known to those of ordinary skill in the art.

In addition to the typical CMYK inks, an ink set may further include one or more "gamut-expanding" inks, including differently colored inks such as an orange ink, a green ink, a red ink, and/or a blue ink, and combinations of full strength and light strength inks such as light cyan and light magenta. These "gamut-expanding" inks may be particularly useful in textile printing for simulating the color gamut of analog screen printing, such as disclosed in U.S. Patent Application Publication No. 20030128246.

Also provided is a method of coating substrate that includes applying the aqueous inkjet composition to at least one surface of the substrate. The resulting coated substrate includes a substrate and a layer derived from the aqueous inkjet composition on at least one surface of the substrate. In the coated substrate, the water and water-soluble organic solvent may be removed, such that the layer derived from the aqueous inkjet composition includes the pigment and the polymeric thickener, and other optional solid components, but does not include water or the water-soluble organic solvent. For example, the layer derived from the aqueous inkjet composition may be prepared by disposing the aqueous inkjet composition on a surface of the substrate and subsequently drying the applied layer.

The aqueous inkjet compositions of the present disclosure can be printed with any suitable inkjet printer, including printers equipped with piezo or thermal print heads. Some examples of thermal ink jet print heads are the Hewlett Packard Deskjet, and Canon iPIXMA iP4200, and some examples of piezo print heads are BROTHER^{®} MFC3360C, and Epson STYLUS^{®} C120. Some suitable print heads are disclosed in U.S. Pat. No. 6,161,918, U.S. Pat. No. 4,490,728, and U.S. Pat. No. 6,648,463, the disclosures of which are incorporated herein by reference.

In addition, the aqueous inkjet compositions of the present disclosure can be printed on any substrate without limitation. The aqueous inkjet composition is particularly advantageous for ink-jet printing on low absorption and non-absorption media. Low absorption media may include coated paper, coated corrugated paper board, coated carton, and folding carton having low surface porosity due to calendaring and/or application of one or more layers of hydrophobic coating layers. Non-absorption substrates refers to plastic substrate such as acrylic resin, polyvinyl chloride, polycarbonate, polyethylene terephthalate, and polyolefin panel or films with various thickness and flexibility. The substrates may be subject to general surface treatment such as primer treatment or corona treatment prior to printing in order to improve ink fixing and adhesion performances.

A particularly advantageous use of the aqueous inkjet composition and ink sets of the present disclosure is in the ink-jet printing of textiles. Textiles include, but are not limited to, cotton, wool, silk, nylon, polyester and the like, and blends thereof. The finished form of the textile includes, but is not limited to, fabrics, garments, t-shirts, furnishings such as carpets and upholstery fabrics, and the like. Additionally, fibrous textile materials that come into consideration are especially hydroxyl-group-containing fibrous materials, including natural fibrous materials such as cotton, linen, and hemp, and regenerated fibrous materials such as viscose and lyocell. Further fibrous materials include wool, silk, polyvinyl, polyacrylonitrile, polyamide, aramid, polypropylene, and polyurethane. These fibrous materials may be in the form of sheet-form textile woven fabrics, knitted fabrics or webs.

Another particularly advantageous use of the aqueous inkjet composition and ink sets of the present disclosure is in the ink-jet printing of commercial coated offset media. Commercial offset paper may contain a nonporous smooth surface. The smooth non-porous surface is formed by a coating which requires more time for fluids to penetrate. In many instances, offset coatings contain polymers that are more hydrophobic, e.g., styrene-butadiene based, than paper coatings specifically designed for ink-jet ink, e.g., water-soluble polymers such as polyvinyl alcohol. Thus, because offset coatings are typically hydrophobic, have poor penetration properties, and are smooth/non-porous, offset coatings tend to interact poorly with water-based inks. Examples of polymers used to coat offset media include latex binders, polystyrenes, polyolefins (polypropylene, polyethylene, polybutadiene), polyesters (PET), polyacrylates, polymethacrylates, and/or poly (maleic anhydride).

This disclosure is further illustrated by the following examples, which are nonlimiting.

### EXAMPLES

The reagents were from commercial sources and are used without further purification unless noted otherwise. Table 1 lists the reagents for the examples.

**Table 1**

| Abbreviation | Description | Source |
|---|---|---|
| DMPA | Dimethylol propionic acid | Aldrich (Milwaukee, WI) |
| EDA | Ethylene diamine | Aldrich (Milwaukee, WI) |
| IPDI | Isophoronediisocyanate | Aldrich (Milwaukee, WI) |
| TEA | Triethylamine | Aldrich (Milwaukee, WI) |
| DETA | Diethylenetriamine | Aldrich (Milwaukee, WI) |
| MEK | Methyl ethyl ketone | Aldrich (Milwaukee, WI) |
| TMP | Trimethylolpropane | Aldrich (Milwaukee, WI) |
| DMEA | Dimethyl ethanolamine | Aldrich (Milwaukee, WI) |
| CHDM | 1,4-Cyclohexanedimethanol | Aldrich (Milwaukee, WI) |
| TERATHANE^{®} T650 | Polyether polyol | Invista (Wilmington, DE) |
| VESTAMIN^{®} A95 | Sodium 2-[(2-aminoethyl)amino]ethanesulfonate (50 wt% solution in water) | Evonik (Germany) |
| ETERNACOLL^{®} UC-100 | Aliphatic polycarbonate diol | UBE industries (Japan) |
| ETERNACOLL^{®} UT-200 | Aliphatic polycarbonate diol | UBE industries (Japan) |
| SURFONYL^{®} 440 | Non-ionic surfactant | Evonik (Germany) |
| SURFONYL^{®} 420 | Non-ionic surfactant | Evonik (Germany) |
| TEGO^{®} Wet 280 | Silicone surfactant | Evonik (Germany) |
| TEGO^{®} Viscoplus 3000 | Hydrophobic modified ethoxylated polyurethane type (HEUR) thickener | Evonik (Germany) |
| RHEOVIS^{®} HS 1332 | Hydrophobically modified alkali swellable polymer | BASF (Germany) |
| RHEOVIS^{®} AS 1337 | Alkali swellable polymer | BASF (Germany) |
| RHEOVIS^{®} HS 1212 | Hydrophobically modified alkali swellable polymer | BASF (Germany) |
| JONCRYL^{®} 67 | Styrenated acrylic polymer | BASF (Germany) |
| Cyan TRB-2 | Cyan pigment PB 15:3 | Dainichiseika (Japan) |
| Yellow PY74 | Yellow pigment PY74 | Sun Chemical (Parsippany, NJ) |
| Carbon black pigment | Carbon black pigment | Orion Engineered Carbons (Luxembourg) |
| Magenta PR122 | Magenta pigment PR122 | Clariant (Switzerland) |

### Preparation of Cyan Pigment Dispersion

A cyan dispersion was prepared according to the procedure described in U.S. Patent Application Publication No. 2012/0214939. A cyan pigment TRB2 was employed, and the dispersant was crosslinked after dispersing the pigment.

### Preparation of Yellow Pigment Dispersion

A yellow dispersion was prepared in a similar fashion as the Cyan Pigment Dispersion with the exception of using yellow pigment PY74.

### Preparation of Black Pigment Dispersion

A black dispersion was prepared in a similar fashion as the Cyan Pigment Dispersion with the exception of using a carbon black pigment.

### Preparation of Magenta Pigment Dispersion

A magenta dispersion was prepared in a similar fashion as the Cyan Pigment Dispersion with the exception of using yellow pigment PR122.

### Preparation of Polymeric Binders

### Polymeric Binder 1

To a dry, alkali- and acid-free flask, equipped with an addition funnel, a condenser, a stirrer, and a nitrogen gas line was added 15.8 grams (g) of CHDM, 104.7 g of TERATHANE^{®} T650, 4.0 g of TMP, and 118 g of acetone. The contents were heated to 40°C and mixed well. Then, 120 g of IPDI was added to the flask via the addition funnel at 40°C over 5 min, with any residual IPDI being rinsed from the addition funnel into the flask with 2 g of acetone.

The flask temperature was raised to 50°C and held at this temperature for 240 minutes. Then, 15.8 g of DMPA and 11 g of TEA were added to the flask via the addition funnel, which was then rinsed with 2 g of acetone. The flask was then heated to 50 °C and held at this temperature until the NCO% was 2.0% or less.

With the temperature held at 50°C, 570 g of deionized (DI) water was added over 10 minutes, followed by 38 g of EDA aqueous solution (as a 10% solution in water) over 5 minutes, via the addition funnel. The resulting mixture was held at 50°C for 1 hour, and then allowed to cool to room temperature.

Acetone was removed under a reduced pressure, leaving a final dispersion of polyurethane with about 30.0% solids by weight.

### Polymeric Binder 2

To a dry, alkali- and acid-free flask, equipped with an addition funnel, a condenser, a stirrer, and a nitrogen gas line was added 280 g of ETERNACOLL^{®} UC-100, 4 g of TMP, 10 g of TEA, and 287 g of acetone. The contents were heated to 40°C and mixed well. Then, 162 g of IPDI was added to the flask via the addition funnel at 40°C over 5 minutes, with any residual IPDI being rinsed from the addition funnel into the flask with 10 g of acetone.

The flask temperature was raised to 50°C and held at this temperature for 120 minutes. Then, 35 g of DMPA and 13.5 g of TEA were added to the flask via the addition funnel, which was then rinsed with 10 g of acetone. The flask temperature was then heated again to 50°C and held at this temperature until the NCO% was 1.4% or less.

With the temperature at 50°C, 28 g of VESTAMIN^{®} A95 solution was added over 5 minutes via the additional funnel, followed by the addition of 950 g of DI water over 10 minutes, and then followed by the addition of 28 g of DETA aqueous solution (as 10% solution in water) over 5 minutes, each via the addition funnel. The resulting mixture was held at 50°C for 1 hour, and then allowed to cool to room temperature.

Acetone was removed under a reduced pressure, leaving a final dispersion of polyurethane with about 35.0% solids by weight.

### Ink Formulations

Inks used in the examples were made according to standard procedures in the inkjet art. Component amounts are in weight percent of the final ink. The polymeric binder and additive are quoted on a solid basis. The pigment dispersion is quoted on pigment basis.

As an example of ink preparation, the ink vehicle was prepared and added with stirring to the aqueous ink binder. After stirring until a homogeneous mixture was obtained, the solution was added to the pigment dispersion and mixed until the solution was homogeneous again. The final step was to add the rheology modifier (or polymeric thickener) to the above mixture, which was then mixed until homogeneous, and the pH was adjusted to between 8.3 to 8.7 using an aqueous KOH solution (3 wt% KOH in water). The compositions of the inks before rheological modifier addition were kept constant as shown in Table 2. When a rheological modifier was added, the balanced water% was adjusted so the sum of components was equal to 100 wt% total.

Table 2 lists the water-soluble organic solvents and their corresponding boiling points that were used to prepare the ink formulations.

**Table 2**

| Solvent | 1,2-Propanediol | 1,3-Propanediol | Dipropylene glycol dimethyl ether | Dipropylene glycol n-propyl ether |
|---|---|---|---|---|
| Boiling Point (°C) | 187 | 211 | 175 | 213 |

Table 3 lists the acid numbers (AN) and M_{w} (g/mol) for the polymeric thickeners/rheology modifiers used to prepare the ink formulations.

**Table 3**

| | AN (mg KOH/g solids) | M_{W} (g/mol) |
|---|---|---|
| RHEOVIS^{®} HS 1332 | 260 | 67,000 |
| RHEOVIS^{®} AS 1337 | 280 | 130,000 |
| RHEOVIS^{®} HS 1212 | 245 | 320,000 |
| JONCRYL^{®} 67 | 213 | 12, 473 |
| Polymeric binder 1 | 20 | 50,000 |
| Polymeric binder 2 | 35 | 30,000 |

The acid number (AN) was determined by titration with KOH and calculated as mg of KOH per gram of polymer.

The M_{w} of the polymers was measured by GPC using polystyrene standards. The GPC was an Alliance e2695 separation module having a 2414 Refractive Index detector that was manufactured by Waters Corporation (Milford, MA). Measurements were performed using 4 different STYRAGEL^{®} GPC columns suitable for measurements from 0 to 600 K, as detailed below, using a 2 wt% solution of acetic acid in tetrahydrofuran as eluent. The 4 columns were: 1. STYRAGEL^{®} WAT044225, 7.8 x 300 mm column packed with 5-µm polystyrene particles having 10000 Å pores. 2. STYRAGEL^{®} WAT044237, 7.8 x 300 mm column packed with 5-µm polystyrene particles having 500 Å pores. 3. STYRAGEL^{®} WAT044234, 7.8 x 300 mm column packed with 5-µm polystyrene particles having 1000 Å pores 4. STYRAGEL^{®} WAT044231, 7.8 x 300 mm column packed with 5-µm polystyrene particles having 50 Å pores.

### Ink Viscosity Evaluation

The viscosities of the aqueous inkjet compositions were determined at 25°C or 30°C, as specified below, by a Brookfield DVII viscometer equipped with a water jacket for precise temperature control and connected with a temperature control bath.

### Black Ink Viscosity

Black inks were prepared using the components listed in Table 4, where the amounts are listed in weight percent. The viscosity is also reported in Table 4.

**Table 4**

| Component | CE1 | CE2 | CE3 | CE4 | CE5 | E1 | E2 |
|---|---|---|---|---|---|---|---|
| Black pigment dispersion | 4 | 4 | 4 | 4 | 4 | 4 | 4 |
| Polymeric binder 1 | 3 | 3 | 3 | 3.5 | 4 | 3 | 3 |
| 1,3 Propanediol | 15 | 15 | 15 | 15 | 15 | 15 | 15 |
| 1,2 Propanediol | 15 | 15 | 15 | 15 | 15 | 15 | 15 |
| SURFYNOL^{®} 440 | 0.5 | 0.5 | 0.5 | 0.5 | 0.5 | 0.5 | 0.5 |
| JONCRYL^{®} 67 | - | 1 | 2 | - | - | - | - |
| RHEOVIS^{®} HS 1332 | - | - | - | - | - | 0.125 | 0.25 |
| DI water (to 100 wt%) | balance | balance | balance | balance | balance | balance | balance |
| | | | | | | | |

| Properties | | | | | | | |
|---|---|---|---|---|---|---|---|
| Viscosity at 25°C (cP) | 5.2 | 4.84 | 5.01 | 5.37 | 5.55 | 7.13 | 10.1 |
| Viscosity increase% compared to CE1 | 0 | -8.7% | -5.47% | 1.32% | 4.72% | 32.5% | 94.3% |

As shown in Table 4, E1 achieved an increase in viscosity of 32.5% and E2 achieved an increase in viscosity of 94.3%, each relative to the viscosity of CE1, which included no rheological modifiers. As shown by CE2 and CE3, using JONCRYL^{®} 67 did not increase the viscosity, whereas CE4 and CE5 show that using extra polymeric binder did not result in a significant increase to the viscosity.

### Yellow Ink Viscosity

Yellow inks were prepared using the components listed in Table 5, where the amounts are listed in weight percent. The viscosity is also reported in Table 5.

**Table 5**

| Component | CE6 | E3 | E4 | E5 | E6 |
|---|---|---|---|---|---|
| Yellow pigment dispersion | 4 | 4 | 4 | 4 | 4 |
| Polymeric binder 1 | 3 | 3 | 3 | 3 | 3 |
| 1,3 Propanediol | 15 | 15 | 15 | 15 | 15 |
| 1,2 Propanediol | 15 | 15 | 15 | 15 | 15 |
| SURFYNOL^{®} 440 | 0.5 | 0.5 | 0.5 | 0.5 | 0.5 |
| RHEOVIS^{®} HS 1332 | - | 0.125 | 0.25 | 0.5 | 1.0 |
| DI water (to 100 wt%) | balance | balance | balance | balance | balance |
| | | | | | |

| Properties | | | | | |
|---|---|---|---|---|---|
| Viscosity at 25°C (cP) | 5.0 | 6.04 | 7.15 | 11.82 | 29.5 |
| Viscosity increase% compared to CE6 | 0 | 20.8% | 43% | 136% | 490% |

As shown in Table 5, E3 achieved an increase in viscosity of 20.8%, E4 achieved an increase in viscosity of 43%, E5 achieved an increase in viscosity of 136%, and E6 achieved an increase in viscosity of 490%, each relative to the viscosity of CE6, which included no rheological modifiers. The results further show that the viscosity was increased based on the amount of the polymeric thickener that was included.

### Cyan Ink Viscosity

Cyan inks were prepared using the components listed in Table 6, where the amounts are listed in weight percent. The viscosity is also reported in Table 6.

**Table 6**

| Component | CE7 | E7 | E8 | E9 | E10 | E11 | E12 | E13 |
|---|---|---|---|---|---|---|---|---|
| Cyan pigment dispersion | 3 | 3 | 3 | 3 | 3 | 3 | 3 | 3 |
| Polymeric binder 2 | 3 | 3 | 3 | 3 | 3 | 3 | 3 | 3 |
| 1,3 Propanediol | 15 | 15 | 15 | 15 | 15 | 15 | 15 | 15 |
| 1,2 Propanediol | 15 | 15 | 15 | 15 | 15 | 15 | 15 | 15 |
| SURFYNOL^{®} 440 | 0.5 | 0.5 | 0.5 | 0.5 | 0.5 | 0.5 | 0.5 | 0.5 |
| RHEOVIS^{®} HS 1332 | - | 0.25 | 0.5 | 0.75 | - | - | - | - |
| RHEOVIS^{®} AS 1337 | - | - | - | - | 0.25 | 0.5 | - | - |
| RHEOVIS^{®} HS 1212 | - | - | - | - | - | - | 0.25 | 0.5 |
| DI water (to 100 wt%) | balance | balance | balance | balance | balance | balance | balance | balance |
| | | | | | | | | |

| Properties | | | | | | | | |
|---|---|---|---|---|---|---|---|---|
| Viscosity at 25°C (cP) | 5.3 | 7.85 | 10.33 | 13.8 | 9.2 | 14.8 | 27.45 | 71.5 |
| Viscosity increase% compared to CE7 | 0 | 48% | 98% | 160% | 73.6% | 179% | 418% | 1249% |

As shown in Table 6, E7 achieved an increase in viscosity of 48%, E8 achieved an increase in viscosity of 98%, E9 achieved an increase in viscosity of 160%, E10 achieved an increase in viscosity of 73.6%%, E11 achieved an increase in viscosity of 179%, E12 achieved an increase in viscosity of 418%, and E13 achieved an increase in viscosity of 1249%, each relative to the viscosity of CE7, which included no rheological modifiers. The results further show that the viscosity was increased based on the amount of the polymeric thickener that was included, regardless of which of the ASE or HASE polymeric thickener that was used.

### Open Time Study

The open time behavior of an ink is often essential to good printing performance. In a commercial printing situation, a printhead could be left idle from several minutes to even hours without capping. During this period, inks are drying at the open nozzles. This phenomenon may lead to printing defects when the printing resumes without purging the ink. The open time measurement was used to characterize the ink's jetting behavior after drying near the print nozzles for different lengths of time. Longer open times are preferred, as printing may be restarted with minimal printing defects without the delays associated with ink purging and printhead cleaning after pausing.

The aqueous inkjet compositions listed in Table 7 were studied for their open time using a lab printing system. In this printing system, inks were jetted from a mounted stationery SAMBA^{®} G3L printhead from Fujifilm Dimatix (Santa Clara, CA) onto the substrate held to a rotating cylinder underneath. The open time performance was judged by the following test: 33 numbers of lines and a 2.2 x 7 cm color block were immediately printed after ink was purged and the nozzle plate was wiped clean. The printer was then left idle for 900 seconds without applying pulses or purging ink through the head. After the idle time, the same pattern of lines and ink block were printed. Typically, the first several numbers of lines printed had defects as a result of ink evaporation during the idling period. The open time was characterized by the number of defected lines before the first perfect line was printed. If the number of defected lines was less than 15 after idling for 900 seconds, then the open time performance was considered acceptable. If the number of defected lines was greater than 20 after idling for 900 seconds, it was considered as having a poor open time.

The aqueous inkjet compositions were prepared using the components listed in Table 7, where the amounts are listed in weight percent. The open time performance is also reported in Table 7.

**Table 7**

| Component | CE7 | E14 | E15 | E16 |
|---|---|---|---|---|
| Cyan pigment dispersion | 2.3 | 2.3 | - | - |
| Magenta pigment dispersion | - | - | 4.5 | - |
| Yellow pigment dispersion | - | - | - | 3 |
| Polymeric binder 2 | 3 | 3 | 4 | 4 |
| 1, 2 Propanediol | 12 | 12 | 10 | 10 |
| Dipropylene glycol n-propyl ether | 2.5 | 2.5 | - | 2.9 |
| Dipropylene glycol di-methyl ether | 3.75 | 3.75 | - | 3.0 |
| SURFYNOL^{®} 420 | 1 | 1 | 1.5 | 1 |
| TEGO^{®} Viscoplus 3000 | 0.25 | - | - | - |
| RHEOVIS^{®} HS 1332 | - | 0.2 | - | 0.2 |
| RHEOVIS^{®} HS 1212 | - | - | 0.05 | - |
| DI water (to 100 wt%) | balance | balance | balance | balance |
| | | | | |

| Properties | | | | |
|---|---|---|---|---|
| % water-soluble organic solvents | 18.25% | 18.25% | 10% | 15.9% |
| Number of defected lines after idling for 900 seconds | 34 | 3 | 12 | 4 |
| Open time performance | Poor | Acceptable | Acceptable | Acceptable |

The results from the jetting experiments in Table 7 demonstrate that the use of a HEUR type thickener, TEGO^{®} Viscoplus 3000, in CE7 can lead to inferior jetting open time performances while inks with the inventive hydrophobically modified alkali swellable emulsion polymer thickeners all had acceptable open times (E14 to E16).

### Drying Rate Study

A Mylar MLBT, which was a clear PET film from DuPont Teijin Film, was coated with an aqueous inkjet composition using a Gardco film applicator rod having a wire size of 2.5 (Paul N. Gardner Inc., Florida, USA) to form a coating having a wet thickness varying from 3 µm to 5 µm. The coatings were dried in a 65°C convection oven for 1 minute or 45 seconds. The degree of drying was evaluated by pressing the ink film with an index finger with moderate pressure for one second. The rating of drying was determined using the following criteria: Rating of 1: the ink was completely intact; Rating of 2: the ink was intact with slight color transfer; Rating of 3: the ink was damaged with some marking from the finger's touch; or Rating of 4: the ink was damaged with significant marking with its size similar to that of the finger's pressing area.

Cyan aqueous inkjet compositions were prepared using the components listed in Table 8, where the amounts are listed in weight percent. The drying rating after 1 minute and after 45 seconds are also reported in Table 8.

**Table 8**

| Component | CE8 | E17 | E18 | E19 | E20 | E21 |
|---|---|---|---|---|---|---|
| Cyan pigment dispersion | 2.3 | 2.3 | 2.3 | 2.3 | 2.3 | 2.3 |
| 1,2 Propanediol | 12 | 7 | 12 | 5 | 5 | 5 |
| 1, 3 Propanediol | 12 | 7 | - | 5 | 5 | 5 |
| Dipropylene glycol n-propyl ether | 2.5 | 2.5 | 2.5 | 2.5 | 2.5 | 2.5 |
| Dipropylene glycol dimethyl ether | 3.75 | 3.75 | 3.75 | 3.75 | 3.75 | 3.75 |
| Polymeric binder 2 | 3 | 3 | 3 | 3 | 3 | 3 |
| RHEOVIS^{®} HS 1332 | - | 0.2 | 0.2 | - | - | - |
| RHEOVIS^{®} AS 1337 | - | - | - | 0.15 | - | - |
| RHEOVIS^{®} HS 1212 | - | - | - | - | 0.05 | 0.1 |
| SURFYNOL^{®} 420 | 1 | 1 | 1 | 1 | 1 | 1 |
| DI water (to 100 wt%) | balance | balance | balance | balance | balance | balance |
| | | | | | | |

| Properties | | | | | | |
|---|---|---|---|---|---|---|
| Viscosity at 30°C (cP) | 4.42 | 4.33 | 4.73 | 4.24 | 3.89 | 5.47 |
| Water-soluble organic solvent% | 30.25% | 20.25% | 18.25% | 16.25% | 16.25% | 16.25% |
| Drying rating after 1 | 3 | 1 | 1 | 1 | 1 | 1 |
| minute | | | | | | |
| Drying rating after 45 seconds | 4 | 1 | 1 | 1 | 1 | 1 |

Magenta aqueous inkjet compositions were prepared using the components listed in Table 9, where the amounts are listed in weight percent. The drying rating after 1 minute and after 45 seconds are also reported in Table 9.

**Table 9**

| Component | CE9 | E22 | E23 | E24 | E25 |
|---|---|---|---|---|---|
| Magenta pigment dispersion | 4.5 | 4.5 | 4.5 | 4.5 | 4.5 |
| 1,2 Propanediol | 10 | 12 | 3 | 10 | 3 |
| 1, 3 Propanediol | 13 | - | - | - | - |
| Dipropylene glycol n-propyl ether | 2.7 | 2.7 | 2.7 | - | - |
| Dipropylene glycol dimethyl ether | 3.2 | 3.2 | 3.2 | - | - |
| TEGO^{®} Wet 280 | 1.5 | - | - | - | - |
| SURFYNOL^{®} 420 | - | 1.5 | 1.5 | 1.5 | 1.5 |
| Polymeric binder 2 | 3.4 | 4.5 | 4.0 | 4.0 | 6.0 |
| RHEOVIS^{®} HS 1332 | - | - | 0.2 | - | - |
| RHEOVIS^{®} HS 1212 | - | - | - | 0.05 | 0.1 |
| DI water (to 100 wt%) | balance | balance | balance | balance | balance |
| | | | | | |

| Properties | | | | | |
|---|---|---|---|---|---|
| Viscosity at 30°C (cP) | 4.75 | 4.57 | 4.46 | 4.5 | 6.8 |
| Water soluble solvent% | 28.9% | 19.9% | 10.9% | 10% | 3% |
| Drying rating after 1 minute | 3 | 1 | 1 | 1 | 1 |
| Drying rating after 45 seconds | 4 | 1 | 1 | 1 | 1 |

Yellow aqueous inkjet compositions were prepared using the components listed in Table 10, where the amounts are listed in weight percent. The drying rating after 1 minute and after 45 seconds are also reported in Table 10.

**Table 10**

| Component | CE 10 | E26 |
|---|---|---|
| Yellow pigment dispersion | 3 | 3 |
| 1,2 Propanediol | 12 | 10 |
| 1, 3 Propanediol | 14 | - |
| Dipropylene glycol n-propyl ether | 2.9 | 2.9 |
| Dipropylene glycol di-methyl ether | 3.0 | 3.0 |
| TEGO^{®} Wet 280 | 1.0 | - |
| SURFYNOL^{®} 420 | - | 1.0 |
| Polymeric binder 2 | 4 | 4 |
| RHEOVIS^{®} HS 1332 | - | 0.2 |
| DI water (to 100 wt%) | balance | balance |
| | | |

| Properties | | |
|---|---|---|
| Viscosity at 30°C (cP) | 4.50 | 4.47 |
| Water soluble solvent% | 32.9% | 16.9% |
| Drying rating after 1 minute | 4 | 1 |
| Drying rating after 45 seconds | 4 | 1 |

The drying rate testing results shown in Tables 8-10 demonstrated that the use of a small amount of the inventive polymeric thickeners can significantly improve the drying speed by replacing a portion of the water-soluble organic solvent. In addition, the inventive polymeric thickeners improved drying times while also maintaining a similar ink viscosity.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

Certain embodiments of the present disclosure are as follows:
Embodiment 1: An aqueous inkjet composition, comprising:
   a pigment;
   water;
   a water-soluble organic solvent; and
   a polymeric thickener comprising an acid number of at least 150 mg KOH/g of solids.
Embodiment 2: The aqueous inkjet composition of Embodiment 1, further comprising a polymeric dispersant.
Embodiment 3: The aqueous inkjet composition of Embodiment 1 or 2, wherein the polymeric dispersant comprises a (meth)acrylic polymer, a polyurethane polymer, or a styrene-maleic anhydride copolymer.
Embodiment 4: The aqueous inkjet composition of any one of Embodiments 1 to 3, further comprising a polymeric binder.
Embodiment 5: The aqueous inkjet composition of Embodiment 4, wherein the polymeric binder comprises a polyurethane, a (meth)acrylic polymer, or a polyurethane-acrylic copolymer, and wherein the polymeric binder is different from the polymeric dispersant.
Embodiment 6: The aqueous inkjet composition of any one of Embodiments 1 to 5, wherein the polymeric thickener has an acid number of 150 mg KOH/g of solids to 650 mg KOH/g of solids.
Embodiment 7: The aqueous inkjet composition of any one of Embodiments 1 to 6, wherein the polymeric thickener is present in an amount from 0.01 wt% to 0.5 wt%, based on total weight of the composition.
Embodiment 8: The aqueous inkjet composition of any one of Embodiments 1 to 7, wherein the pigment is present in an amount from 0.1 wt% to 15 wt%, based on total weight of the composition.
Embodiment 9: The aqueous inkjet composition of any one of Embodiments 1 to 8, wherein the water-soluble organic solvent is present in an amount from 1 wt% to 35 wt%, based on total weight of the composition.
Embodiment 10: The aqueous inkjet composition of any one of Embodiments 1 to 9, wherein the water-soluble organic solvent has a boiling point of 150°C to 230°C.
Embodiment 11: The aqueous inkjet composition of any one of Embodiments 1 to 10, wherein the pH of the composition is from 8 to 9.5.
Embodiment 12: The aqueous inkjet composition of any one of Embodiments 1 to 11, wherein the composition has a viscosity at 25°C that is greater than a viscosity at 25°C of a comparable composition that comprises the pigment, the water, and the water-soluble organic solvent, wherein the comparable composition does not comprise the polymeric thickener.
Embodiment 13: The aqueous inkjet composition of any one of Embodiments 1 to 12, wherein the composition has a viscosity at 25°C that is at least 20% greater than a viscosity at 25°C of a comparable composition that comprises the pigment, the water, and the water-soluble organic solvent, wherein the comparable composition does not comprise the polymeric thickener.
Embodiment 14: The aqueous inkjet composition of any one of Embodiments 1 to 13, wherein the polymeric thickener has a weight average molecular weight of at least 50,000 grams per mole, as determined by gel permeation chromatography.
Embodiment 15: The aqueous inkjet composition of any one of Embodiments 1 to 14, wherein the polymeric thickener comprises an alkali swellable acrylic emulsion polymer, a hydrophobically modified alkali swellable emulsion polymer, or a combination thereof.
Embodiment 16: The aqueous inkjet composition of Embodiment 15, wherein:
   the alkali swellable acrylic emulsion polymer comprises a (meth)acrylic acid homopolymer or copolymer; and
   the hydrophobically modified alkali swellable polymer is a copolymer derived from two or more of (meth)acrylic acid, a (meth)acrylate ester, and maleic acid.
Embodiment 17: A method of coating a substrate, the method comprising applying the aqueous inkjet composition of any one of Embodiments 1 to 16 to at least one surface of the substrate.
Embodiment 18: A coated substrate, comprising:
   a substrate; and
   a layer derived from the aqueous inkjet composition of any one of Embodiments 1 to 16 disposed on at least one surface of the substrate.
Embodiment 19: The coated substrate of Embodiment 18, wherein the layer comprises:
   the pigment; and
   the polymeric thickener.
Embodiment 20: The coated substrate of Embodiment 18 or 19, wherein the layer is prepared by a method comprising:
   disposing the composition on the at least one surface of the substrate, and
   drying.

## Claims

1. An aqueous inkjet composition, comprising:
a pigment;
water;
a water-soluble organic solvent; and
a polymeric thickener comprising an acid number of at least 150 mg KOH/g of solids.

2. The aqueous inkjet composition of claim 1, further comprising a polymeric dispersant, preferably wherein the polymeric dispersant comprises a (meth)acrylic polymer, a polyurethane polymer, or a styrene-maleic anhydride copolymer.

3. The aqueous inkjet composition of claim 1, further comprising a polymeric binder, preferably wherein the polymeric binder comprises a polyurethane, a (meth)acrylic polymer, or a polyurethane-acrylic copolymer.

4. The aqueous inkjet composition of claim 2, further comprising a polymeric binder; preferably wherein the polymeric binder comprises a polyurethane, a (meth)acrylic polymer, or a polyurethane-acrylic copolymer, and wherein the polymeric binder is different from the polymeric dispersant.

5. The aqueous inkjet composition of any one of claims 1 to 4, wherein the polymeric thickener has an acid number of 150 mg KOH/g of solids to 650 mg KOH/g of solids; and/or wherein the polymeric thickener is present in an amount from 0.01 wt% to 0.5 wt%, based on total weight of the composition.

6. The aqueous inkjet composition of any one of claims 1 to 5, wherein the pigment is present in an amount from 0.1 wt% to 15 wt%, based on total weight of the composition.

7. The aqueous inkjet composition of any one of claims 1 to 6, wherein the water-soluble organic solvent is present in an amount from 1 wt% to 35 wt%, based on total weight of the composition; and/or wherein the water-soluble organic solvent has a boiling point of 150°C to 230°C.

8. The aqueous inkjet composition of any one of claims 1 to 7, wherein the pH of the composition is from 8 to 9.5.

9. The aqueous inkjet composition of any one of claims 1 to 8, wherein the composition has a viscosity at 25°C that is greater than a viscosity at 25°C of a comparable composition that comprises the pigment, the water, and the water-soluble organic solvent, wherein the comparable composition does not comprise the polymeric thickener; and/or wherein the composition has a viscosity at 25°C that is at least 20% greater than a viscosity at 25°C of a comparable composition that comprises the pigment, the water, and the water-soluble organic solvent, wherein the comparable composition does not comprise the polymeric thickener.

10. The aqueous inkjet composition of any one of claims 1 to 9, wherein the polymeric thickener has a weight average molecular weight of at least 50,000 grams per mole, as determined by gel permeation chromatography.

11. The aqueous inkjet composition of any one of claims 1 to 10, wherein the polymeric thickener comprises an alkali swellable acrylic emulsion polymer, a hydrophobically modified alkali swellable emulsion polymer, or a combination thereof, preferably wherein:
the alkali swellable acrylic emulsion polymer comprises a (meth)acrylic acid homopolymer or copolymer; and
the hydrophobically modified alkali swellable polymer is a copolymer derived from two or more of (meth)acrylic acid, a (meth)acrylate ester, and maleic acid.

12. A method of coating a substrate, the method comprising applying the aqueous inkjet composition of any one of claims 1 to 11 to at least one surface of the substrate.

13. A coated substrate, comprising:
a substrate; and
a layer derived from the aqueous inkjet composition of any one of claims 1 to 11 disposed on at least one surface of the substrate.

14. The coated substrate of claim 13, wherein the layer comprises:
the pigment; and
the polymeric thickener.

15. The coated substrate of claim 13 or 14, wherein the layer is prepared by a method comprising:
disposing the composition on the at least one surface of the substrate, and
drying.
